# EUROPÄISCHE PATENTANMELDUNG

(11) **EP 2 085 661 A1**
(43) Veröffentlichungstag der Anmeldung: **05.08.2009**
(21) Anmeldenummer: 09001318.6
(22) Anmeldetag: 30.01.2009
(51) Int. Cl.: F16H 61/64, F16D 33/06

(54) **Verfahren zur Steuerung der Leistungsübertragung einer hydrodynamischen Maschine in einem Antriebsstrang und Antriebsstrang**

(30) Priorität: 31.01.2008 DE 102008007046
(71) Anmelder: Voith Patent GmbH, 89522 Heidenheim (DE)
(72) Erfinder: Schips, Rainer, 73479 Ellwagen (DE); Weng, Otto, 73485 Unterschneidheim (DE); Menne, Achim, Dr., 74564 Crailsheim (DE)
(74) Vertreter: Schmidt, Sven Hendrik

(57) **Zusammenfassung**

Die Erfindung betrifft ein Verfahren zur Steuerung der Leistungsübertragung einer hydrodynamischen Maschine (1), umfassend ein Primärrad (3) und ein Sekundärrad (4), die miteinander einen mit Arbeitsmedium befüllbaren oder befüllten Arbeitsraum ausbilden, in einem Fahrzeugantriebsstrang (2), mit den folgenden Schritten:
- mit der hydrodynamischen Maschine wird Antriebsleistung von einer Antriebsmaschine (9) hydrodynamisch auf Antriebsräder (11) des Fahrzeugs übertragen;
- die Temperatur der Antriebsmaschine (9), des Arbeitsmediums und/oder der Umgebung zumindest mittelbar erfasst wird und die hydrodynamische Leistungsübertragung in der hydrodynamischen Maschine in Abhängigkeit der erfassten Temperatur variabel eingestellt wird;
- wobei beim Erfassen vergleichsweise niedriger Temperaturen eine niedrigere hydrodynamische Leistungsübertragung in der hydrodynamischen Maschine und beim Erfassen vergleichsweise hoher Temperaturen eine höhere hydrodynamische Leistungsübertragung in der hydrodynamischen Maschine eingestellt wird.

Die Erfindung ist durch das folgende Merkmal gekennzeichnet, dass
- die niedrige hydrodynamische Leistungsübertragung in der , hydrodynamischen Maschine durch Verminderung oder verzögerte Erhöhung des Füllungsgrades der hydrodynamischen Maschine eingestellt wird.

## Beschreibung

Die vorliegende Erfindung betrifft ein Verfahren zur Steuerung der Leistungsübertragung einer hydrodynamischen Maschine in einem Antriebsstrang, insbesondere Fahrzeugantriebsstrang, und einen Antriebsstrang, der zur Ausführung eines erfindungsgemäßen Verfahrens eingerichtet ist.

Antriebsstränge, beispielsweise Fahrzeugantriebsstränge, in welchen eine hydrodynamische Maschine als Anfahrelement vorgesehen ist, sind bekannt. Eine solche hydrodynamische Maschine ist im Antriebsstrang zwischen einer Antriebsmaschine und - bei einem Fahrzeug - den Antriebsrädern oder einem durch die Antriebsmaschine angetriebenen Aggregat angeordnet und dient dazu, beim Anfahren oder bei Schaltvorgängen, wenn ein Schaltgetriebe im Antriebsstrang vorgesehen ist, den Schlupf zwischen dem Pumpenrad der hydrodynamischen Maschine, welches in Abhängigkeit der Drehzahl der Antriebsmaschine umläuft, und dem Turbinenrad, welches in Abhängigkeit der Drehzahl auf der Abtriebsseite, das heißt der Drehzahl der Antriebsräder oder des angetriebenen Aggregates umläuft, zunehmend auszugleichen, wobei dieser Ausgleichsvorgang im Gegensatz zu Antriebssträngen mit einer mechanischen Reibkupplung als Anfahrelement verschleißfrei erfolgt. Die hydrodynamische Maschine kann beispielsweise als hydrodynamischer Wandler ausgeführt sein, welcher neben dem Pumpenrad und dem Turbinenrad wenigstens ein Leitrad oder einen Leitschaufelkranz umfasst. Der Leitschaufelkranz dient als Momentenstütze, so dass neben einer Drehzahlwandlung auch eine Drehmomentwandlung und insbesondere eine Drehmomentüberhöhung, das heißt das Turbinenrad wird mit einem größeren Drehmoment angetrieben als das Pumpenrad, möglich ist. Es sind auch hydrodynamische Wandler bekannt, die mehrere Leftschaufelkränze oder mehrere Pumpen- und/oder Turbinenräder aufweisen. Die vorliegende Erfindung betrifft jegliche Art von hydrodynamischern Wandler.

Alternativ kann die hydrodynamische Maschine auch als hydrodynamische Kupplung ausgeführt sein, welche im Gegensatz zu hydrodynamischen Wandlern keinen Leitschaufelkranz als Drehmomentstütze aufweist. In der Regel welsen solche hydrodynamischen Kupplungen ausschließlich ein Pumpenrad und ein Turbinenrad auf, die miteinander einen Arbeitsraum ausbilden, oder bei einer zweiflutigen oder mehrflutigen Ausführung zwei Pumpenräder und zwei Turbinenräder beziehungsweise mehrere Pumpenräder und mehrere Turbinenräder, von denen jeweils zwei gemeinsam eine Arbeitsraum ausbilden. Der oder jeder Arbeitsraum wird demnach ohne Zwischenschaltung eines Leitrades oder Leitschaufelkranzes ausgebildet.

Obwohl somit bereits Antriebsstränge zur Verfügung stehen, die bezüglich des Anfahrens beispielsweise eines Kraftfahrzeuges erhebliche Vorteile gegenüber früheren mit mechanischen Reibkupplungen ausgeführten Antriebssträngen bringen, hat sich in der Praxis herausgestellt, dass selbst die mit hydrodynamischen Wandlern mit einer Drehmomentüberhöhung ausgestatteten Getriebe in solchen Antriebssträngen bei kalten Witterungsverhältnissen einem hinsichtlich des Fahrkomforts ungünstigem Betriebsverhalten unterliegen. Herkömmlich war man bestrebt, dieses ungünstlge Betriebsverhalten durch Modifikationen an der Antriebsmaschine, die in der Regel als Verbrennungsmaschine, beispielsweise Dieselmotor oder sonstiger Kolbenmotor, ausgeführt ist, zu verbessern. Trotz aller Anstrengungen konnte dieses Problem bis heute nicht vollständig beseitigt werden.

Das Dokument DE 33 35 259 A1 beschreibt eine hydrodynamische Lüfterkupplung für einen Kühlgebläseantrieb, wobei die Lüfterkupplung, wenn der Kühlbedarf geringer ist, eine niedrigere Leistung überträgt, um das Gebläse anzutreiben.

Das Dokument DE 196 14 589 A1 beschreibt einen Temperaturschutz für eine hydrodynamische Kupplung. Demgemäß wird mit zunehmender Temperatur die Füllung der hydrodynamischen Kupplung vermindert, zumindest dann, wenn eine Übertemperatur erreicht wird.

Das Dokument DE 10 2004 013 738 A1 beschreibt, dass zur Steuerung einer hydrodynamischen Kupplung eine Öltemperatur herangezogen werden kann, um einen Fahrerwunsch hinsichtlich der Beschleunigung oder Verzögerung eines Fahrzeugs optimal umzusetzen.

Das Dokument DE 199 39 297 A1 beschreibt die Möglichkeit einer Kennlinienveränderung eines hydrodynamischen Wandlers in einem Kraftfahrzeugantriebsstrang. Dabei wird ein zusätzliches Leitrad mittels einer Scherkupplung, die mit Arbeitsmedium des Wandlers befüllt ist, mehr oder minder abgestützt, um die Kennlinie des Wandlers zu ändern. Bei kaltem Arbeitsmedium ist die Viskosität des Arbeitsmediums höher und das Leitrad wird dadurch stärker abgestützt. Hierdurch ergibt sich eine vergleichsweise weichere Kennlinie. Bei einem warmen Arbeitsmedium wird das Leitrad weniger stark abgestützt und es ergibt sich eine härtere Kennlinie.

Die aus dem Dokument DE 199 39 297 A1 bekannten Merkmale sind im Oberbegriff von Anspruch 1 zusammengefasst.

Obwohl das zuvor genannte Dokument bereits eine vorteilhafte Charakteristik einer hydrodynamischen Maschine ermöglicht, ist der bauliche Aufwand zum Erreichen dieser Charakteristik hoch, und die auf das Arbeitsmedium wirkenden Scherkräfte können sich auf Dauer ungünstig auf die Eigenschaften des Arbeitsmediums auswirken.

Der vorliegenden Erfindung liegt die Aufgabe zugrunde, ein Verfahren zur Steuerung der Leistungsübertragung in einem Antriebsstrang mit einer hydrodynamischen Maschine, insbesondere einem hydrodynamischen Wandler oder einer hydrodynamischen Kupplung, und einen Antriebsstrang anzugeben, welche hinsichtlich des genannten Problems verbessert sind. Insbesondere soll der Antriebsstrang derart gesteuert werden, dass die Antriebsmaschine auch beim Anfahrvorgang mit geringen Temperaturen komfortabel, das heißt frei von Vibrationen und nachteiligen Emissionen, betrieben werden kann.

Die erfindungsgemäße Aufgabe wird durch ein Verfahren und einen Antriebsstrang gemäß den unabhängigen Ansprüchen gelöst. Die abhängigen Ansprüche stellen bevorzugte Ausführungsformen der Erfindung dar.

Die Erfinder haben erkannt, dass durch eine geschickte Steuerung der hydrodynamischen Leistungsübertragung in der hydrodynamischen Maschine im Antriebsstrang ein Drücken beziehungsweise ungünstig hohes Belasten der Antriebsmaschine, die insbesondere als Verbrennungsmotor, beispielsweise Dieselmotor oder sonstiger Kolbenmotor, ausgeführt ist, vermieden werden kann, und hierdurch der gesamte Betriebszustand für den Fahrer komfortabler wird. Auch kann die Antriebsmaschine in einem hinsichtlich ihrer Emissionen und ihres Wirkungsgrades günstigeren Betriebspunkt des Motorkennfeldes betrieben werden.

Ein erfindungsgemäßes Verfahren zur Steuerung der Leistungsübertragung einer hydrodynamischen Maschine, umfassend ein Primärrad und ein Sekundärrad, die miteinander einen mit Arbeitsmedium befüllbaren oder befüllten Arbeitsraum ausbilden, in einem Antriebsstrang, insbesondere einen Fahrzeugantriebsstrang, umfassend die folgenden Schritte:
- Mit der hydrodynamischen Maschine wird Antriebsleistung von einer Antriebsmaschine hydrodynamisch auf Antriebsräder des Fahrzeugs oder auf ein durch die Antriebsmaschine angetriebenes Aggregat übertragen.
- Die Temperatur der Antriebsmaschine, des Arbeitsmediums und/oder der Umgebung wird zumindest mittelbar erfasst und die hydrodynamische Leistungsübertragung in der hydrodynamischen Maschine in Abhängigkeit der erfassten Temperatur variabel eingestellt.

Die Temperatur wird dabei beispielsweise von geeigneten Sensoren erfasst und stellt gleichzeitig die Eingangsgröße für die Regelung der Leistungsübertragung der hydrodynamischen Maschine dar. Die Leistungsübertragung wird somit durch Verändern einer Stellgröße aktiv gesteuert oder geregelt. Alternativ oder zusätzlich kann auch eine passive Erfassung der Temperatur des Arbeitsmediums und Variieren der Leistungsübertragung durch Verändern des Füllungsgrades des Arbeitsmediums der hydrodynamischen Maschine dadurch erfolgen, dass im Arbeitsmediumzulauf, über welchen das Arbeitsmedium in den Arbeitsraum der hydrodynamischen Maschine geleitet wird, eine Drosselstelle vorgesehen ist, die in Abhängigkeit der Temperatur und damit der Viskosität des Arbeitsmediums einen mehr oder weniger großen Arbeitsmediumvolumenstrom beziehungsweise Arbeitsmediummassenstrom durchlässt. Bei einer niedrigeren Temperatur ist das Arbeitsmedium zähflüssiger (viskoser), so dass weniger Arbeitsmedium in den Arbeitsraum strömt. Der Arbeitsraum wird entweder weniger schnell befüllt oder bei einem relativ größeren abströmenden Volumenstrom teilweise entleert. Bei einer höheren Temperatur ist das Arbeitsmedium dünnflüssiger, so dass mehr Arbeitsmedium durch die Drosselstelle strömt und der Arbeitsraum schneller befüllt wird oder eine Entleerung verhindert wird.

Erfindungsgemäß wird beim Erfassen vergleichsweise niedriger Temperaturen eine niedrigere hydrodynamische Leistungsübertragung in der hydrodynamischen Maschine und beim Erfassen vergleichsweise hoher Temperaturen eine höhere hydrodynamische Leistungsübertragung in der hydrodynamischen Maschine eingestellt. Eine solche Variation der hydrodynamischen Leistungsübertragung in Abhängigkeit der Temperatur wird erfindungsgemäß dadurch erreicht, dass die hydrodynamische Maschine bei vergleichsweise niedrigen Temperaturen nicht vollständig gefüllt wird und insbesondere zusätzlich der Kreislauf des Arbeitsmediums im Arbeitsraum gestört wird, so dass weniger Antriebsleistung vom Pumpenrad auf das Turbinenrad übertragen wird als bei stärker befülltem Arbeitsraum oder bei weniger/nicht gezielt gestörter Kreislaufströmung. Die Störung der Kreislaufströmung kann beispielsweise durch Einbringen eines Drosselbauteils in den Arbeitsraum beziehungsweise die Kreislaufströmung im Arbeitsraum bewirkt werden.

Bevorzugt ist die hydrodynamische Maschine eine hydrodynamische Kupplung.

Die erfindungsgemäße Lösung ist für den Einsatz in Antriebssträngen mit jeglicher Art von Schalt-, Handschalt-, oder vorzugsweise automatisierten Schaltgetrieben und Automatgetrieben geeignet, welche eine hydrodynamische Maschine, beispielsweise eine hydrodynamische Kupplung oder einen hydrodynamischen Drehmomentwandler umfassen. Der Antriebsstrang, welcher als Fahrzeugantriebsstrang ausgebildet ist, umfasst eine Antriebsmaschine und die mit dieser wenigstens mittelbar koppelbare hydrodynamische Maschine, über welche Antriebsleistung von der Antriebsmaschine auf Antriebsräder und insbesondere zusätzlich auf ein durch die Antriebsmaschine angetriebenes Aggregat übertragen wird.

Nach einem weiteren Erfindungsmerkmal umfasst der Antriebsstrang eine Steuervorrichtung, welche die Leistungsübertragung mit der hydrodynamischen Maschine steuert oder regelt. Die Steuervorrichtung ist derart eingerichtet, dass sie ein erfindungsgemäßes Verfahren ausführt. Eine solche Steuervorrichtung ist dann in der Lage, die Leistungsübertragung der hydrodynamischen Maschine während eines Fahr- oder Anfahrvorgangs in Abhängigkeit der Temperatur des Arbeitsmediums, der Antriebsmaschine, der Umgebung des Antriebsstranges oder sonstiger Temperatur zu regeln oder zu steuern. Die Steuervorrichtung steuert damit indirekt das Pumpenradaufnahmemoment und schont beim Anfahrvorgang bei geringen Temperaturen die Antriebsmaschine, vor allem bei einem Hochlaufen aus dem Stand.

Die Erfindung soll nachfolgend anhand von Ausführungsbeispielen und der beigefügten Figuren exemplarisch erläutert werden.

Es zeigen:
- Figur 1: eine symbolhafte Darstellung eines erfindungsgemäßen Antriebsstranges;
- Figuren 2a, 2b, 2c: jeweils ein Diagramm, wobei über der Zeit die Volumenstromänderung aufgetragen ist.

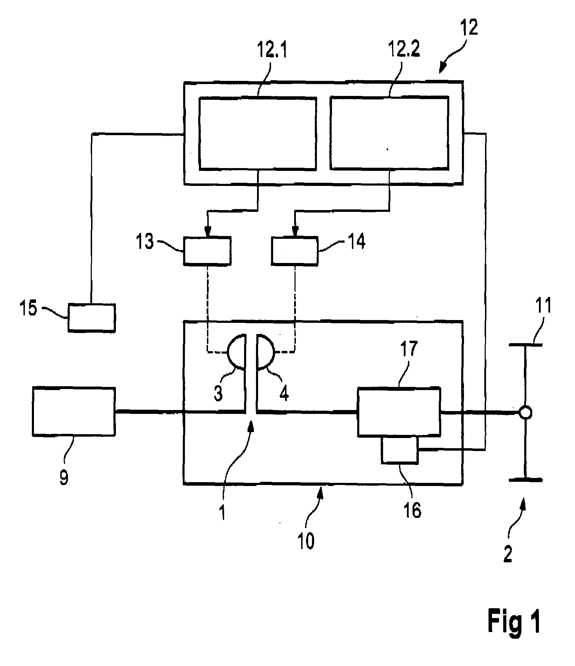

In der Figur 1 ist symbolhaft ein Fahrzeugantriebsstrang 2 dargestellt. Dieser umfasst eine Antriebsmaschine 9, die vorliegend als Verbrennungsmotor ausgeführt ist, ein Getriebe 10, welches eine hydrodynamische Maschine 1, die vorliegend als hydrodynamische Kupplung ausgeführt ist, sowie ein Wechselgetriebe 17 aufweist und Antriebsräder 11.

Die hydrodynamische Kupplung weist ein Primärrad (Pumpenrad 3) und ein Sekundärrad (Turbinenrad 4) auf, die miteinander einen Arbeitsraum ausbilden, in dem sich eine Kreislaufströmung des Arbeitsmediums einstellen kann. Zur Variierung der hydrodynamischen Leistungsübertragung der hydrodynamischen Kupplung ist ein Drosselbauteil vorgesehen, welches in die Kreislaufströmung und aus ihr heraus verschoben werden kann. Zusätzlich kann die hydrodynamische Leistungsübertragung über den Füllungsgrad, das bedeutet das Verhältnis der tatsächlichen zur maximal möglichen Arbeitsmediummenge im Arbeitsraum eingestellt werden. Die hydrodynamische Kupplung ist dabei zwischen der Antriebsmaschine 9 und dem Wechselgetriebe 17 angeordnet. Letzteres kann ein manuelles Schaltgetriebe oder ein Automatikgetriebe sein. Die Leistung der Antriebsmaschine 9 wird somit über das Getriebe 10 auf die Antriebsräder 11 übertragen.

Dem Fahrzeugantriebsstrang 2 ist eine Steuervorrichtung 12, umfassend eine Positionsregelung 12.1 für das Drosselbauteil und eine Füllungsgradregelung 12.2 zugeordnet. Dabei steht die Positionsregelung 12.1 für das Drosselbauteil in Verbindung mit einem Aktuator 13 für das Drosselbauteil. Denkbar ist es auch, dass der Aktuator 13 für das Drosselbauteil in der Steuervorrichtung 12 integriert ist. Der Aktuator 13 bewirkt ein Verschieben des Drosselbauteils in die oder aus der Kreislaufströmung. Ein solcher Aktuator 13 kann beispielsweise als hydraulischer Kolben ausgeführt sein oder andere hydraulische, elektrische, pneumatische oder mechanische Einrichtungen umfassen, die wenigstens mittelbar derart mit dem Drosselbauteil verbunden sind, dass sie eine Verschiebung des Drosselbauteils bewirken.

Die Füllungsgradregelung 12.2 steht ebenfalls in Verbindung mit einem Aktuator 14 zur Regelung des Füllungsgrades der hydrodynamischen Kupplung. Auch hier ist es denkbar, dass der Aktuator 14 in der Steuervorrichtung 12 integriert ist. Ein solcher Aktuator 14 kann beispielsweise als Regelventil, insbesondere Druckregelventil oder als Wegeventil ausgeführt sein.

Die Steuervorrichtung 12 steht mit Temperatursensoren in Verbindung, so dass eine Regelung der hydrodynamischen Leistungsübertragung abhängig von der Temperatur erreicht werden kann. So kann beispielsweise ein Temperatursensor 15 in der oder an der Antriebsmaschine 9 ausgeführt sein beziehungsweise in der näheren Umgebung des Fahrzeugantriebstranges 2 angeordnet sein. Weiterhin kann ein Temperatursensor 16 im Fahrzeugantriebsstrang 2 derart angeordnet sein, dass dieser die Temperatur des Arbeitsmediums beziehungsweise des Getriebeöls des Wechselgetriebes 17 erfasst. Zusätzlich zu den Temperatursensoren 15, 16 können auch Einrichtungen zur Erfassung der Drehzahlen am Primärrad 3 und/oder am Sekundärrad 4 vorgesehen sein. Daneben kann auch die Erfassung der Motorendrehzahl beziehungsweise des Motorendrehmomentes durch Sensoren oder die Steuervorrichtung 12 erfolgen, so dass die Leistungsübertragung der hydrodynamischen Maschine 1 in Abhängigkeit der Primärrad- und/oder der Sekundärrad- beziehungsweise der Motorendrehzahl gesteuert oder geregelt werden kann.

Die Steuervorrichtung 12 stellt somit in der vorliegenden Ausführungsform eine Steuerung zum Variieren der hydrodynamischen Leistungsübertragung durch das Drosselbauteil sowie zusätzlich eine übergeordnete Steuerung des Füllungsgrades in Abhängigkeit der Temperatur dar. Beim Erfassen vergleichsweise niedriger Temperaturen der Umgebung und/oder des Arbeitsmediums wird eine geringere Leistungsübertragung der hydrodynamischen Maschine eingestellt, als dies bei höheren Temperaturen der Fall ist. Im vorliegenden Fall wird somit über die Steuereinrichtung 12 und den Aktuator 14 der Füllungsgrad der hydrodynamischen Kupplung beim Kaltstart, also bei relativ kaltem Motor verringert. Der Begriff Kaltstart bezeichnet hierbei den Anfahrbeziehungsweise Beschleunigungsvorgang aber auch den bereits andauernden Fahrvorgang, nachdem das Fahrzeug nach längerer Standzeit bereits angefahren wurde. Die Steuervorrichtung 12 überprüft ferner, ob die hydrodynamische Kupplung beim Fahr- beziehungsweise Anfahrvorgang gefüllt, teilgefüllt oder leer ist. Bei längeren Stillstandszeiten des Fahrzeugs kann eine automatische Entleerung der hydrodynamischen Kupplung durch konstruktive Maßnahmen erfolgen. Das Arbeitsmedium, vorzugsweise das Öl läuft sodann in einen Rückhaltebehälter. Ist die hydrodynamische Kupplung beim Anfahrvorgang entleert, so gibt die Steuervorrichtung 12 an den Aktuator 14 ein Signal zur teilweisen Befüllung der hydrodynamischen Kupplung. Der Füllungsgrad wird abhängig von der erfassten Temperatur eingestellt. Ist die Kupplung beziehungsweise deren Arbeitsraum bei einem Kaltstart teilweise gefüllt, so kann zunächst entweder kein zusätzliches Arbeitsmedium in den Arbeitsraum eingebracht werden, der Füllungsgrad des Arbeitsraumes gezielt verringert werden oder zusätzliches Arbeitsmedium in den Arbeitsraum eingebracht werden, letzteres jedoch bei Beibehalten eines Füllungsgrades unterhalb des maximal möglichen Füllungsgrades.

Während des gesamten Fahr- beziehungsweise Anfahrvorgangs wird die Temperatur, die nun steigt, wenigstens mittelbar von der Steuervorrichtung 12 aufgenommen und der Füllungsgrad angepasst. Gleichzeitig wird während des Anfahrvorgangs, das heißt bei einem großen Schlupf zwischen Pumpenrad 3 und Turbinenrad 4 der hydrodynamischen Kupplung das Drosselbauteil in die Kreislaufströmung der hydrodynamischen Kupplung hineingeschoben, wodurch die Kreislaufströmung gestört wird, so dass das von der Antriebsmaschine 9 aufzubringende Drehmoment auf der Pumpenradseite der hydrodynamischen Kupplung verringert wird. Das Drosselbauteil wird auch besonders beim im Stand laufenden Motor, wie beispielsweise beim Warten an Ampeln in die Kreislaufströmung verschoben, so dass der Motor ein kleineres Drehmoment während der Standzeit und beim Anfahren überwinden muss.

Der Füllungsgrad der hydrodynamischen Kupplung wird ausgehend von einem minimalen Füllungsgrad bei einer erfassten niedrigen Temperatur auf einen maximalen Füllungsgrad bei einer Betriebstemperatur geregelt. Dazu wird der Volumenstrom, der in den Arbeitsraum der hydrodynamischen Kupplung strömt in Abhängigkeit der Zeit im Wesentlichen stetig gesteigert. Die hydrodynamische Kupplung weist dann unterhalb des maximalen Füllungsgrades ein weiches Verhalten auf, zusätzlich dazu kann sich das Arbeitsmedium schneller erwärmen, da die kleinere Arbeitsmediummenge bei einem verringerten Füllungsgrad eine geringere Wärmekapazität aufweist und besonders weil weniger kaltes Arbeitsmedium nachströmt. Eine solche schnellere Erwärmung des Arbeitsmediums in der hydrodynamischen Kupplung kann auch bei maximalem Füllungsgrad der hydrodynamischen Kupplung durch die Drosselung der Arbeitsmediumzufuhr erreicht werden.

Alternativ zur Füllungsgraderhöhung in Abhängigkeit der Temperatur, nachdem ein verminderter Füllungsgrad erfindungsgemäß in Abhängigkeit der Temperatur eingestellt worden ist, kann die Erhöhung des Füllungsgrades auch zeitabhängig erfolgen.

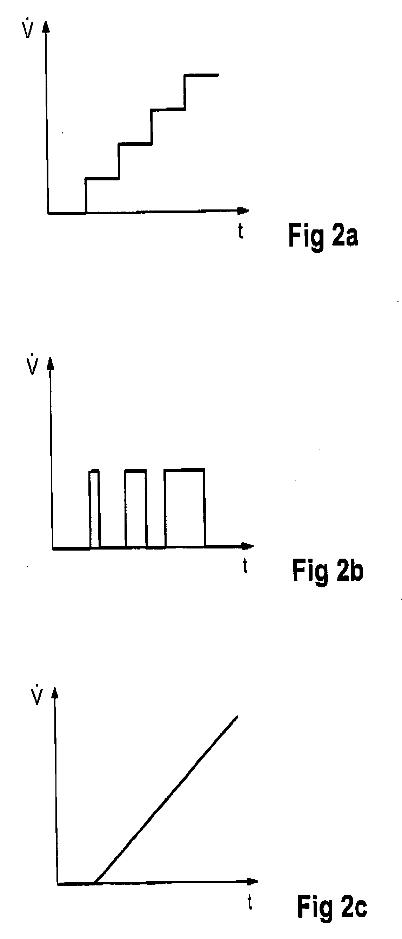

In den Figuren 2a bis 2c sind drei Möglichkeiten der Erhöhung des Volumenstroms in Abhängigkeit der Zeit aufgezeigt. Die Figur 2a zeigt eine schrittweise Erhöhung des Volumenstroms V mit zunehmender Zeit. Der Volumenstrom wird dabei auf jeder Stufe konstant gehalten.

Figur 2b zeigt eine stoßweise Einleitung des Volumenstroms in die hydrodynamische Maschine 1 in Abhängigkeit der Zeit. Auffallend ist, dass der Betrag des Volumenstroms gleich bleibt, dieser jedoch bei jedem Stoß über ein zunehmendes Zeitintervall wirkt.

In der Figur 2c ist im Wesentlichen eine lineare Zunahme des Volumenstroms in Abhängigkeit der Zeit aus dem Diagramm ersichtlich. Bei einer erfindungsgemäßen Ausführungsform kann eine Überbrückungskupplung vorgesehen sein, die bevorzugt als nasslaufende Kupplung ausgeführt ist, so dass die hydrodynamische Maschine 1 und vorliegend die hydrodynamische Kupplung mechanisch überbrückt werden kann. Die Überbrückungskupplung kann hierbei vorteilhaft mit dem Arbeitsmedium der hydrodynamischen Maschine 1, insbesondere der hydrodynamischen Kupplung, beaufschlagt werden und insbesondere in Arbeitsmediumströmungsrichtung hinter der hydraulischen Maschine 1 angeordnet sein, so dass in Folge von Flüssigkeitsreibung der Kreislaufströmung im Arbeitsraum erhitztes Arbeitsmedium aus der hydrodynamischen Maschine 1 in die Überbrückungskupplung strömt. Diese Anordnung hat den Vorteil, dass weniger viskoses Arbeitsmedium in der Überbrückungskupplung eine bessere Charakteristik der Drehmoment- und Leistungsübertragung zur Folge hat, so dass auch die Überbrückungskupplung weicher wird, so dass der Motor beim Anfahr-oder Schaltvorgang weniger belastet und der gesamte Anfahrvorgang für den Fahrer komfortabler wird. Wird zusätzlich der Füllungsgrad der hydrodynamischen Maschine 1 nach dem erfindungsgemäßen Verfahren in Abhängigkeit der Temperatur verringert, so wird das Arbeitsmedium schneller dünnflüssig und trägt zu einer noch besseren Charakteristik der Überbrückungskupplung bei.

Gemäß einer weiteren Ausführungsform kann in der Zuleitung zum Arbeitsraum der hydrodynamischen Maschine 1 eine Drossel vorgesehen sein, wobei die Drossel bei niedrigen Temperaturen des Arbeitsmediums einen kleineren Arbeitsmediumvolumenstrom durchlässt als dies bei höheren Temperaturen des Arbeitsmediums der Fall ist. Die Drossel stellt somit zugleich die mittelbare Erfassung der Temperatur des Arbeitsmediums dar, weil das Arbeitsmedium mit zunehmender Temperatur dünnflüssige (weniger viskos) wird.

### Bezugszeichenliste

- 1: Hydrodynamische Maschine
- 2: Fahrzeugantriebsstrang
- 3: Primärrad
- 4: Sekundärrad

- 9: Antriebsmaschine
- 10: Getriebe
- 11: Antriebsräder
- 12: Steuervorrichtung
- 12.1: Positionsregelung des Drosselbauteils
- 12.2: Füllungsgradregelung
- 13: Aktuator für Drosselbauteil
- 14: Aktuator für Füllungsgrad
- 15: Temperatursensor für Antriebsmaschine/Umgebung
- 16: Temperatursensor für Arbeitsmedium/Getriebeöl
- 17: Wechselgetriebe

## Patentansprüche

1. Verfahren zur Steuerung der Leistungsübertragung einer hydrodynamischen Maschine (1), umfassend ein Primärrad (3) und ein Sekundärrad (4), die miteinander einen mit Arbeitsmedium befüllbaren oder befüllten Arbeitsraum ausbilden, in einem Fahrzeugantriebsstrang (2), mit den folgenden Schritten:
1.1 mit der hydrodynamischen Maschine (1) wird Antriebsleistung von einer Antriebsmaschine (9) hydrodynamisch auf Antriebsräder (11) des Fahrzeugs übertragen;
1.2 die Temperatur der Antriebsmaschine (9), des Arbeitsmediums und/oder der Umgebung zumindest mittelbar erfasst wird und die hydrodynamische Leistungsübertragung in der hydrodynamischen Maschine (1) in Abhängigkeit der erfassten Temperatur variabel eingestellt wird;
1.3 wobei beim Erfassen vergleichsweise niedriger Temperaturen eine niedrigere hydrodynamische Leistungsübertragung in der hydrodynamischen Maschine (1) und beim Erfassen vergleichsweise hoher Temperaturen eine höhere hydrodynamische Leistungsübertragung in der hydrodynamischen Maschine (1) eingestellt wird;
**dadurch gekennzeichnet, dass**
1.4 die niedrige hydrodynamische Leistungsübertragung in der hydrodynamischen Maschine (1) durch Verminderung oder verzögerte Erhöhung des Füllungsgrades der hydrodynamischen Maschine (1) eingestellt wird.

2. Verfahren gemäß Anspruch 1, **dadurch gekennzeichnet, dass** die Temperatur mittels wenigstens eines Temperatursensors (15, 16) erfasst wird, und die Leistungsübertragung in Abhängigkeit der erfassten Temperaturwerte mittels einer Steuervorrichtung (12) gesteuert oder geregelt wird.

3. Verfahren gemäß einem der Ansprüche 1 oder 2, **dadurch gekennzeichnet, dass** die Verminderung oder verzögerte Erhöhung des Füllungsgrades bei vergleichsweise niedrigen Temperaturen des Arbeitsmediums durch Leiten des Arbeitsmediums über eine Drossel in den Arbeitsraum bewirkt wird, wobei die Drossel bei niedrigen Temperaturen des Arbeitsmediums einen kleineren Arbeitsmediumvolumenstrom durchlässt als bei höheren Temperaturen des Arbeitsmediums.

4. Verfahren gemäß einem der Ansprüche 1 bis 3, **dadurch gekennzeichnet, dass** die hydrodynamische Maschine (1) eine hydrodynamische Kupplung ist.

5. Antriebsstrang, insbesondere Fahrzeugantriebsstrang, umfassend eine Antriebsmaschine (9) und eine mit dieser wenigstens mittelbar koppelbare hydrodynamische Maschine (1), über welche Antriebsleistung von der Antriebsmaschine (9) auf Antriebsräder (11) oder auf ein durch die Antriebsmaschine (9) angetriebenes Aggregat übertragbar ist; und
5.1 eine Steuervorrichtung (12), welche die Leistungsübertragung mit der hydrodynamischen Maschine (1) steuert oder regelt;
**dadurch gekennzeichnet, dass**
5.2 die Steuervorrichtung (12) derart eingerichtet ist, dass sie ein Verfahren gemäß einem der Ansprüche 1 bis 4 ausführt.

6. Antriebsstrang gemäß Anspruch 5, **dadurch gekennzeichnet, dass** eine Füllsteuerungsvorrichtung vorgesehen ist, mittels welcher der Füllungsgrad der hydrodynamischen Maschine (1) zur Variierung der hydrodynamischen Leistungsübertragung einstellbar ist.

7. Antriebsstrang gemäß einem der Ansprüche 5 oder 6, **dadurch gekennzeichnet, dass** ein Drosselelement vorgesehen ist, welches zur Variierung der hydrodynamischen Leistungsübertragung in eine in der hydrodynamischen Maschine (1) ausbildbare Kreislaufströmung hinein und aus dieser herausschiebbar ist.
